# EUROPEAN PATENT APPLICATION

(11) **EP 4 516 481 A1**
(43) Date of publication of application: **05.03.2025**
(21) Application number: 24198264.4
(22) Date of filing: 03.09.2024
(51) Int. Cl.: B29C 45/76

(54) **MOLDING MACHINE**

(30) Priority: 04.09.2023 JP 2023142831
(71) Applicant: Toyo Machinery & Metal Co., Ltd., Akashi-shi, Hyogo 674-0091 (JP)
(72) Inventor: TARUYA, Koji, Hyogo, 674-0091 (JP); OKA, Masaaki, Hyogo, 674-0091 (JP)
(74) Representative: D Young & Co LLP

(57) **Abstract**

A molding machine includes: an injection device to inject a molding material into a cavity of a clamped mold; a display device to display information; a memory capable of storing condition data sets that include setting values; and a control device to control the injection device according to one data set preselected from the data sets stored in the memory. The control device selectively executes a selected condition display process of listing the setting values in the selected condition data set on the display device and a stand-by condition display process of listing the setting values in a stand-by condition data set (one of the condition data sets different from the selected condition data set) on the display device, and in the stand-by condition display process, causes the display device to display the setting values identical to and different from those of the selected condition data set in different modes.

## Description

### BACKGROUND OF THE INVENTION

### Field of the Invention

The present invention relates to a molding machine that injects a molding material into a mold for molding a molded article.

### Description of the Related Art

There are molding machines in the past that inject a molding material into a cavity in a clamped mold. Such a molding machine optimizes operation of injecting a molding material by setting molding conditions in accordance with the kinds of mold and molding material.

To derive optimal molding conditions, injection molding has to be repeated while making fine adjustments to a plurality of setting values. PTL 1 discloses a technique to display a plurality of molding conditions as a list on a display for comparison and review.

Patent Literature (PTL) 1 refers to JP 2019-077075 A.

### SUMMARY OF THE INVENTION

In recent years, to finely control operation of molding machines, the number of setting values configuring the molding conditions tends to increase. There is thus a problem of difficulty in comparison due to the small size of characters (numbers) for displaying a plurality of molding conditions as a list on a display as in the case of PTL 1.

The present invention has been made to solve such a problem of the techniques in the past, and one or more embodiments of the present disclosure provides a molding machine that can readily compare setting values included in each of a plurality of condition data sets.

To solve the above problem, the present invention is a molding machine, including: an injection device configured to inject a molding material into a cavity of a clamped mold; a display device configured to display information; a memory capable of storing a plurality of condition data sets, each set including a plurality of setting values; and a control device configured to control the injection device in accordance with a selected condition data set selected in advance from the plurality of condition data sets stored in the memory, wherein the control device selectively executes a selected condition display process of displaying the plurality of setting values included in the selected condition data set as a list on the display device and a stand-by condition display process of displaying the plurality of setting values included in a stand-by condition data set as a list on the display device, the stand-by condition data set being one of the condition data sets different from the selected condition data set, and, in the stand-by condition display process, causes the display device to display the plurality of setting values displayed as a list among which the setting value identical to that of the selected condition data set and the setting value different from that of the selected condition data set are displayed in different modes.

The present invention allows production of the molding machine that can readily compare the setting values included in each of the plurality of condition data sets.

### BRIEF DESCRIPTION OF THE DRAWINGS

FIG. 1 is a side view of an injection molding machine according to an embodiment of the present disclosure.
FIG. 2 is a hardware block diagram of the injection molding machine.
FIG. 3 illustrates data examples of a plurality of condition data sets stored in an external storage device.
FIG. 4 is a screen transition diagram of screens displayed on a display input device.
FIG. 5 illustrates a screen example of a condition data set selection screen.
FIG. 6 illustrates a screen example of a stand-by condition preview screen.
FIG. 7 illustrates a screen example of a selection condition preview screen.
FIG. 8 illustrates a screen example of a stand-by condition preview screen in which setting values different from those of the selected condition data set are displayed in a different mode.

### DETAILED DESCRIPTION OF THE INVENTION

A description is given below to an injection molding machine 10 according to the present invention based on the drawings. The injection molding machine 10 is a device that injects a measured molding material into a mold for molding an injection molded article (hereinafter, referred to as "injection molding"). It should be noted that specific examples of the molding machine are not limited to the injection molding machine 10 and may include an electric die casting machine that injects molten metal (molding material) into a mold for molding a molded article.

### Configuration of injection Molding Machine 10

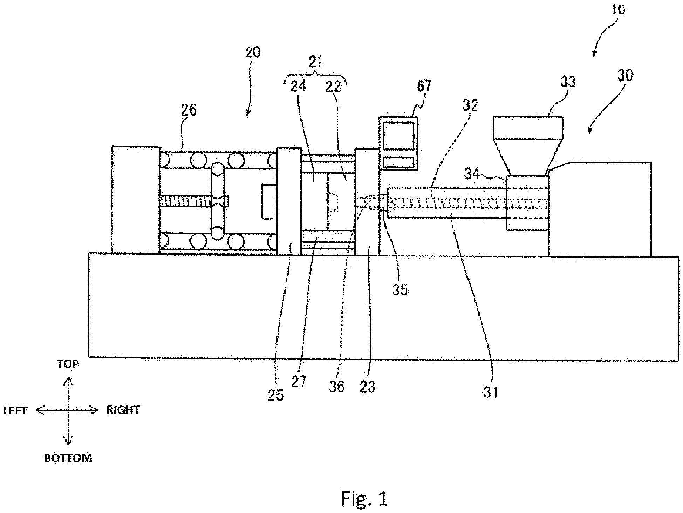

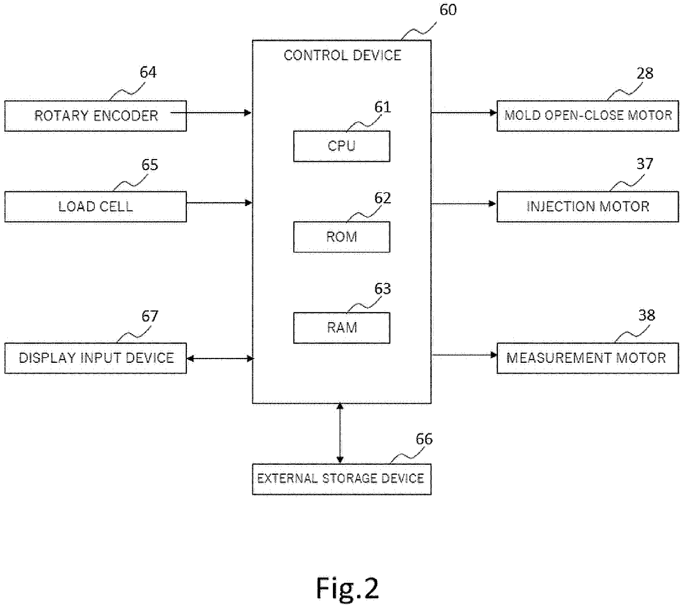

FIG. 1 is a side view of the injection molding machine 10 according to the present embodiment. FIG. 2 is a hardware block diagram of the injection molding machine 10. As illustrated in FIGs. 1 and 2, the injection molding machine 10 is mainly provided with a clamping device 20, an injection device 30, and a control device 60.

The clamping device 20 performs opening and closing and clamping of a mold 21. Specifically, the clamping device 20 is mainly provided with a fixed die plate 23 supporting a fixed-side mold 22 and a movable die plate 25 supporting a movable-side mold 24. The fixed-side mold 22 and the movable-side mold 24 are supported to face each other in a left-right direction (horizontal direction) of the injection molding machine 10.

The movable die plate 25 moves in the left-right direction along a tie bar 27 by transmission of a driving force of a mold open-close motor 28 through a toggle link mechanism 26. When the movable die plate 25 moves in the left direction, the movable-side mold 24 is separated from the fixed-side mold 22. Meanwhile, when the movable die plate 25 moves in the right direction, the movable-side mold 24 abuts on the fixed-side mold 22 to form a cavity (internal space) inside the mold 21. Then, when further adding a pressure in the direction of moving the movable die plate 25 in the right direction, the fixed-side mold 22 and the movable-side mold 24 are clamped.

The injection device 30 plasticizes and measures a molding material for injection. The injection device 30 according to the present embodiment is arranged separate from the clamping device 20 in the horizontal direction (right of the clamping device 20). The injection device 30 is mainly provided with a heating cylinder 31, a screw 32, a hopper 33, and a hopper block 34.

The heating cylinder 31 is a cylindrical member extending in the left-right direction of the injection molding machine 10. The heating cylinder 31 is mainly provided with a resin passage 35 and a nozzle 36. In addition, the heating cylinder 31 has an outer circumferential surface to which a band heater is attached to heat the heating cylinder 31.

The resin passage 35 is a columnar space extending in the axial direction (longitudinal direction) inside the heating cylinder 31. The resin passage 35 communicates with the outside (cavity of the mold 21) of the heating cylinder 31 through the nozzle 36 provided at a distal end (front end) of the heating cylinder 31. In other words, the resin passage 35 is a space extending from the nozzle 36 along the axial direction.

The screw 32 is a columnar member. The screw 32 has an outer circumferential surface provided with a spiral groove. The screw 32 is stored in an internal space of the heating cylinder 31 in a state that allows the injection molding machine 10 to move in the left-right direction (hereinafter, referred to as "move forward and backward") and to rotate. The screw 32 moves forward and backward by transmission of a driving force of an injection motor 37 and rotates by transmission of a driving force of a measurement motor 38.

More specifically, when the injection motor 37 is normally rotated, the screw 32 moves toward the distal end (i.e., the nozzle 36) of the heating cylinder 31 (moves forward). Meanwhile, when the injection motor 37 is counter-rotated, the screw 32 moves toward the basal end (i.e., opposite side to the nozzle 36) of the heating cylinder 31 (moves backward). In the description below, within a region that can be reached by the distal end of the screw 32 in the heating cylinder 31, the position closest to the nozzle 36 is referred to as a "forward limit" and the position farthest from the nozzle 36 is referred to as a "backward limit." In addition, the terms "normal rotation" and "counter-rotation" of the injection motor 37 do not specify absolute rotation directions and merely specify relative relationship (i.e., normal rotation and counter-rotation are rotation in opposite directions).

The hopper 33 is a funnel-shaped member to retain the molding material as a raw material. The hopper block 34 is a member supporting the heating cylinder 31 and the hopper 33. The hopper 33 communicates with the resin passage 35 on the basal end side, rather than the distal end, of the heating cylinder 31 through the hopper block 34. The molding material retained in the hopper 33 is supplied to the resin passage 35 of the heating cylinder 31 through an opening provided at a lower end. The molding material used for the injection molding machine 10 is, for example, so-called "pellets" molded in a columnar shape.

The injection device 30 causes the injection motor 37 to counter-rotate and causes the measurement motor 38 to rotate, thereby causing the screw 32 to move backward while rotating. The pellets supplied through the hopper 33 are thus filled (measured) in the resin passage 35 in front of the screw 32 while being plasticized. In addition, the injection device 30 causes the injection motor 37 to normally rotate, thereby causing the screw 32 to move forward. The plasticized resin in front of the screw 32 is thus injected into the cavity of the mold 21 through the nozzle 36.

### Configuration of Control Device 60

As illustrated in FIG. 2, the control device 60 is provided with a central processing unit (CPU) 61 as an arithmetic mechanism, a read only memory (ROM) 62 to store various programs, and a random access memory (RAM) 63 as a workspace for the arithmetic mechanism. Each process described later may be achieved by the CPU 61 reading and executing the programs stored in the ROM 62.

It should be noted that the specific configuration of the control device 60 is not limited to this and may be achieved by hardware, such as an application specific integrated circuit (ASIC) and a field-programmable gate array (FPGA).

The control device 60 controls the entire operation of the injection molding machine 10. More specifically, the control device 60 controls the mold open-close motor 28, the injection motor 37, and the measurement motor 38 based on various signals output from a rotary encoder 64 and a load cell 65 (pressure sensor).

The mold open-close motor 28, the injection motor 37, and the measurement motor 38 are, for example, servomotors to generate a driving force of opening and closing the mold 21, a driving force of moving the screw 32 forward and backward, and a driving force of rotating the screw 32 in accordance with control by a servo amplifier, not shown.

The rotary encoder 64 is a sensor to detect the speed and the distal end position of the screw 32. More specifically, the rotary encoder 64 outputs a pulse signal in accordance with the rotation of the injection motor 37 to the control device 60. Then, the control device 60 specifies the speed of the screw 32 by the number of pulse signals output per unit time. In addition, the control device 60 specifies the distal end position of the screw 32 by the accumulated value of the pulse signals.

The load cell 65 is a sensor to detect a pressure applied to the screw 32. More specifically, the load cell 65 outputs a pressure signal (voltage value), in accordance with the pressure applied to the screw 32, to the control device 60. Then, the control device 60 specifies the pressure applied to the screw 32 based on the pressure signal output from the load cell 65.

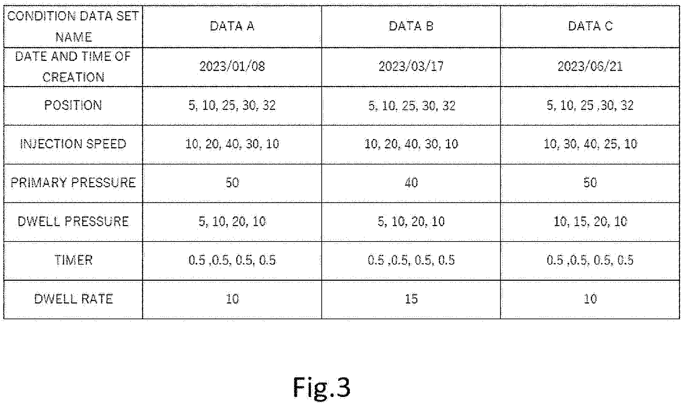

In addition, the control device 60 is connected to an external storage device 66. The external storage device 66 is an example of a memory capable of storing a plurality of condition data sets (refer to FIG. 3). Examples of the external storage device 66 to be employed include a hard disk drive (HDD), a universal serial bus (USB) memory, and the like. It should be noted that the memory may be the RAM 63 mounted to the control device 60 and the like. Details of the condition data sets are described later with reference to FIG. 3.

Moreover, the control device 60 is connected to a display input device 67. The display input device 67 is a user interface provided with a display (display device) to display various kinds of information to be notified to an operator and buttons, switches, dials, and the like (input device) to accept input operations by an operator. In addition, the display input device 67 may be provided with a touchscreen superimposed on the display. The display input device 67 accepts an input operation by an operator and outputs an input signal corresponding to the accepted input operation to the control device 60.

### Examples of Condition data sets

FIG. 3 illustrates data examples of the plurality of condition data sets stored in the external storage device 66. As illustrated in FIG. 3, the external storage device 66 is capable of storing the plurality of condition data sets. The condition data sets are data indicating operating conditions of injection molding by the injection molding machine 10 (hereinafter, referred to as "molding conditions"). The condition data sets are, for example, binary data or text data of a plurality of setting values arranged in a predetermined order.

The condition data sets according to the present embodiment include, for example, a condition data set name, date and time of creation, and a plurality of setting values (position, injection speed, primary pressure, dwell pressure, timer, dwell rate). Note that the setting values included in the condition data sets are not limited to the examples described above. In addition, the condition data sets may include, not only the setting values indicating the operation of the injection device 30, but also setting values indicating operation of the clamping device 20.

The condition data set name is an identifier to uniquely identify the plurality of condition data sets stored in the external storage device 66. The condition data set name may be, for example, arbitrarily set by an operator through the display input device 67. The date and time of creation is the date and time when the condition data set is created. In addition, if any of the condition data sets is updated through a selection condition preview screen described later, the updated date and time may be set to the date and time of creation.

The setting value "position" indicates the position (mm) of the distal end of the screw 32 in the heating cylinder 31. More specifically, the setting value "position" indicates a position to switch the speed of the screw 32 during injection of the plasticized resin (hereinafter, referred to as an "injection process"). Note that the setting value "position" may include a plurality of switching positions. The position in the heating cylinder 31 may be expressed as the distance from the forward limit toward the basal end of the heating cylinder 31, indicating the forward limit as 0 mm. The position of the distal end of the screw 32 is detected by the rotary encoder 64.

The setting value "injection speed" indicates the speed (mm/s) of moving the screw 32 forward in the injection process. More specifically, the setting value "injection speed" may include a plurality of speeds switched in a plurality of switching positions indicated by the setting value "position". That is, the forward speed indicated by the setting value "injection speed" is the forward speed of the screw 32 between adjacent switching positions. The forward speed of the screw 32 is detected by the rotary encoder 64.

The setting value "primary pressure" indicates the maximum value (MPa) of the pressure applied to the screw 32 in the injection process. That is, speed control by the setting value "injection speed" is given priority in the injection process and, if reaching the pressure indicated by the setting value "primary pressure", the pressure is controlled not to exceed the indicated pressure. The pressure applied to the screw 32 is detected by the load cell 65.

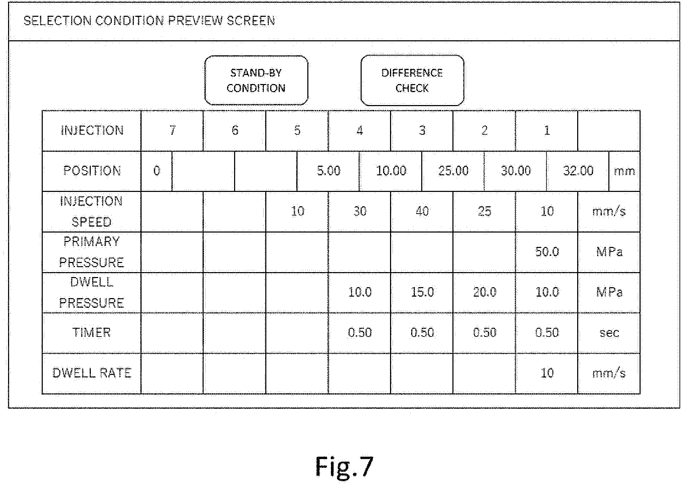

That is, according to the selected condition data sets illustrated in FIG. 7, in the injection process, the control device 60 moves the screw 32 forward at 10 (mm/s) between 32.00 (mm) and 30.00 (mm), at 25 (mm/s) between 30.00 (mm) and 25.00 (mm), at 40 (mm/s) between 25.00 (mm) and 10.00 (mm), at 30 (mm/s) between 10.00 (mm) and 5.00 (mm), and at 10 (mm/s) between 5.00 (mm) and later. In addition, the control device 60 controls the speed in the injection process in such a manner that the injection speed becomes closer to the setting value without exceeding the maximum value (= 50 (MPa)) of the pressure applied to the screw 32.

The setting value "dwell pressure" indicates the pressure (MPa) that the screw 32 applies to the plasticized resin injected into the mold 21. In other words, the setting value "dwell pressure" indicates the pressure that the screw 32 applies in the forward direction after finishing the plasticized resin injection (hereinafter, this process is referred to as a "dwelling process"). The setting value "dwell pressure" may include a plurality of pressures. The pressure applied to the screw 32 is detected by the load cell 65.

The setting value "timer" indicates a timing (sec) of switching each of the plurality of pressures indicated by the setting value "dwell pressure". The setting value "timer" indicates the time elapsed after finishing the injection process (starting the dwelling process). The setting value "timer" may include a plurality of switching timings. The elapsed time is measured by a system clock mounted to the control device 60.

The setting value "dwell rate" indicates the maximum value (mm/s) of the speed of the screw 32 in the dwelling process. That is, pressure control by the setting value "dwell pressure" is given priority in the dwelling process and, if reaching the speed indicated by the setting value "dwell rate", the speed is controlled not to exceed the indicated speed. The forward speed of the screw 32 is detected by the rotary encoder 64.

That is, according to the selected condition data sets illustrated in FIG. 7, in the dwelling process, the control device 60 applies 10.0 (MPa) to the plasticized resin in the mold 21 for 0.50 (sec) from the start of the dwelling process, 20.0 (MPa) for the subsequent 0.50 (sec), 15.0 (MPa) for the subsequent 0.50 (sec), and 10.0 (MPa) for the subsequent 0.50 (sec). In addition, the control device 60 controls the pressure in the dwelling process in such a manner that the pressure becomes closer to the setting value without exceeding the maximum value (= 10 (mm/s)) of the forward speed of the screw 32.

One of the plurality of condition data sets stored in the external storage device 66 is a "selected condition data set" selected in advance through the display input device 67. Meanwhile, another condition data set different from the selected condition data set among the condition data sets stored in the external storage device 66 is a "stand-by condition data set". That is, the external storage device 66 includes the only one selected condition data set and 1 or more (a plurality of, in the present embodiment) stand-by condition data sets. In the present embodiment, a condition data set C identified by the condition data set name "data C" is defined as the "selected condition data set" and condition data sets A and B identified by the condition data set names "data A" and "data B" are defined as the "stand-by condition data sets".

The control device 60 controls the clamping device 20 and the injection device 30 in accordance with the selected condition data set to cause the injection molding machine 10 to execute injection molding. That is, selection of a different condition data set may cause a difference in the operation of the injection molding machine 10 during the injection molding (in other words, the quality of the injection molded article). Meanwhile, the stand-by condition data sets are the condition data sets not used for the injection molding at present. It should be noted that a switching operation through the display input device 67 may switch the selected condition data set and any of the stand-by condition data sets (i.e., cause one of the stand-by condition data sets to become a new selected condition data set).

For example, on the basis of the result of injection molding using the condition data set A (at this point, the condition data set A is the selected condition data set), an operator of the injection molding machine 10 changes part of the setting values included in the condition data set A to create a condition data set B. Then, on the basis of the result of injection molding using the condition data set B (at this point, the condition data set B is the selected condition data set), the operator changes part of the setting values included in the condition data set B to create a condition data set C. In such a manner, the operator of the injection molding machine 10 repeats fine adjustments to the setting values of the condition data sets for test execution of injection molding and thus executes the operations of deriving optimal molding conditions. In the course of these operations, the plurality of condition data sets are stored in the external storage device 66.

### Screen Transition of injection Molding Machine 10

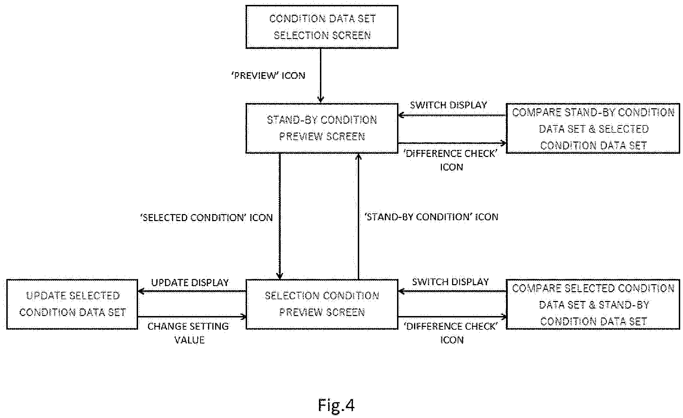

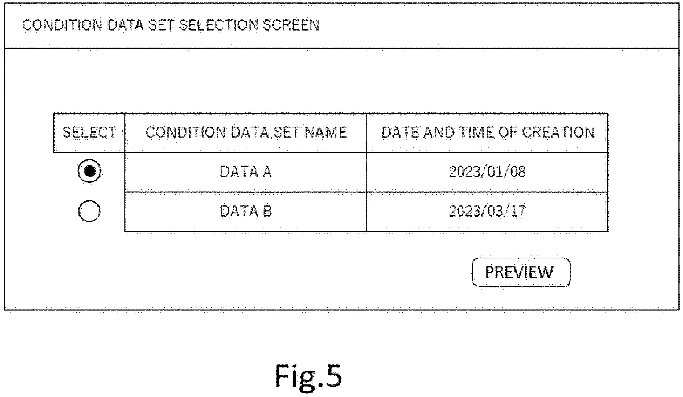

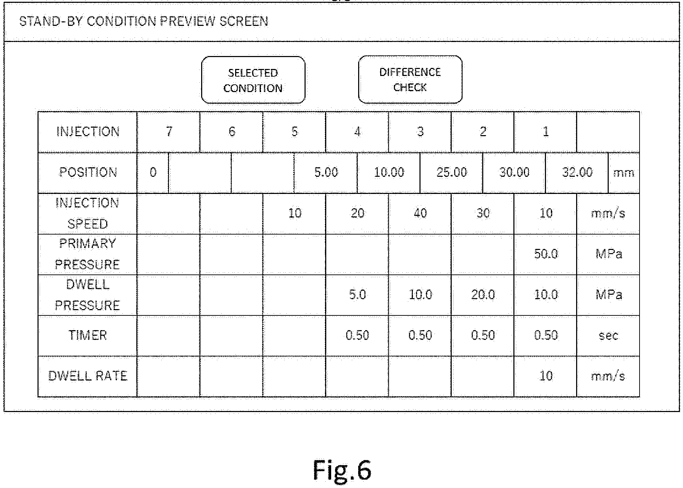

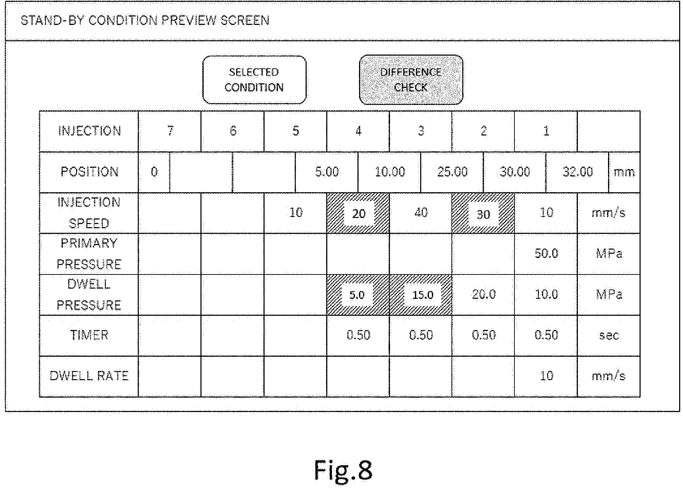

FIG. 4 is a screen transition diagram of screens displayed on the display input device 67. FIG. 5 illustrates a screen example of a condition data set selection screen. FIG. 6 illustrates a screen example of a stand-by condition preview screen. FIG. 7 illustrates a screen example of a selection condition preview screen. FIG. 8 illustrates a screen example of a stand-by condition preview screen in which setting values different from those of the selected condition data set are displayed in a different mode.

The control device 60 causes the display to display the condition data set selection screen illustrated in FIG. 5 in accordance with an instruction (input operation) by an operator through the display input device 67. The condition data set selection screen is a screen to allow the operator to select one of the plurality of stand-by condition data sets stored in the external storage device 66. The condition data set selection screen includes, for example, information to specify the respective stand-by condition data sets (e.g., the condition data set names and dates and times of creation), radio buttons corresponding to the respective stand-by condition data sets, and a 'preview' icon.

The control device 60 accepts an operation of selecting or deselecting of any of the radio buttons by an operator and an operation of tapping the 'preview' icon by an operator through the display input device 67. These operations are examples of the input operation to select one of the plurality of stand-by condition data sets stored in the external storage device 66. In addition, these processes are examples of the selection process. Then, for example, if the 'preview' icon is tapped while a radio button corresponding to the condition data set A is selected, the control device 60 causes the display to display the stand-by condition preview screen illustrated in FIG. 6.

The stand-by condition preview screen is a screen to display the plurality of setting values, as a list, included in one of the stand-by condition data set. More specifically, the stand-by condition preview screen is a screen to display the plurality of setting values, as a list, included in the stand-by condition data set selected through the condition data set selection screen (i.e., in the selection process). Even more specifically, the stand-by condition preview screen is a screen to display only the setting values, as a list, included in the selected stand-by condition data set among the selected condition data set and the stand-by condition data sets. This process is an example of a stand-by condition display process.

The stand-by condition preview screen includes, for example, the plurality of setting values included in the stand-by condition data set, a 'selected condition' icon, and a 'difference check' icon. Then, the control device 60 accepts operations of tapping the 'selected condition' icon and the 'difference check' icon by an operator through the display input device 67. Meanwhile, the control device 60 does not accept an input operation to change any of the setting values on the stand-by condition preview screen (i.e., in the stand-by condition display process). That is, the operator is not allowed to change the plurality of setting values displayed on the stand-by condition preview screen through the display input device 67.

If the 'selected condition' icon on the stand-by condition preview screen is tapped, the control device 60 causes the display to display the selection condition preview screen illustrated in FIG. 7 instead of the stand-by condition preview screen. The selection condition preview screen is a screen to display the plurality of setting values, as a list, included in the selected condition data set. More specifically, the selection condition preview screen is a screen to display only the setting values, as a list, included in the selected condition data set among the selected condition data set and the stand-by condition data sets. This process is an example of a selected condition display process.

The selection condition preview screen includes, for example, the plurality of setting values included in the selected condition data set, a 'stand-by condition' icon, and the 'difference check' icon. Then, the control device 60 accepts operations of tapping the 'stand-by condition' icon and the 'difference check' icon by an operator through the display input device 67. In addition, the control device 60 accepts an input operation to change any of the setting values through the display input device 67 on the selection condition preview screen (i.e., in the selected condition display process). That is, the operator is allowed to change the plurality of setting values displayed on the selection condition preview screen through the display input device 67.

Then, the control device 60 updates the selected condition data set stored in the external storage device 66 in accordance with the input operation change any of the setting values on the selection condition preview screen. As an example, the control device 60 may set (i.e., overwrite) the setting value changed through the display input device 67 to the selected condition data set stored in the external storage device 66. As another example, the control device 60 may set (i.e., create new) the setting value changed through the display input device 67 by replicating the selected condition data set stored in the external storage device 66.

In addition, if the 'stand-by condition' icon on the selection condition preview screen is tapped, the control device 60 causes the display to display the stand-by condition preview screen illustrated in FIG. 6 instead of the selection condition preview screen. That is, the control device 60 causes the selection condition preview screen and the stand-by condition preview screen to be selectively displayed. In other words, the control device 60 selectively executes the selected condition display process and the stand-by condition display process. Tapping of the 'selected condition' icon and the 'stand-by condition' icon is an example of the input operation to switch the selected condition display process and the stand-by condition display process.

In addition, if the 'difference check' icon on the stand-by condition preview screen is tapped, the control device 60 compares each of the setting values included in the stand-by condition data set selected through the condition data set selection screen with the corresponding setting values of the selected condition data set. Then, as illustrated in FIG. 8, the control device 60 causes the plurality of setting values of the stand-by condition data set to be displayed as a list on the display among which the setting values identical to the corresponding setting values of the selected condition data set and the setting values different from the corresponding setting values of the selected condition data set are displayed in different modes.

In the present embodiment, the setting values identical to those of the selected condition data set are displayed on "solid white backgrounds" and the setting values different from those of the selected condition data set are displayed on "hatched backgrounds". It should be noted that specific examples of the different display mode are not limited to a change in color or pattern of the backgrounds and may include the color, thickness, font, and the like of the setting values.

If the 'difference check' icon in FIG. 8 is tapped, the control device 60 causes all the setting values on the stand-by condition preview screen to be displayed in an identical display mode as illustrated in FIG. 6. That is, every time the 'difference check' icon on the stand-by condition preview screen is tapped, the control device 60 switches whether to display in different modes. Tapping of the 'difference check' icon is an example of the input operation to switch whether to display the setting values identical to those of the selected condition data set and the setting values different from those of the selected condition data set in different modes.

Moreover, if the 'difference check' icon on the selection condition preview screen is tapped, the control device 60 may cause the plurality of setting values of the selected condition data set to be displayed as a list on the display among which the setting values identical to the corresponding setting values of the stand-by condition data set and the setting values different from the corresponding setting values of the stand-by condition data set are displayed in different modes. As another example, display of the 'difference check' icon may be omitted from the selection condition preview screen.

### Action and Effects of this Embodiment

According to the above embodiment, display of only the setting values, as a list, included in either the selected condition data set or one of the stand-by condition data sets allows enlarged display of the characters (numbers) for a display with an identical size compared with display the setting values, as a list, included in both the selected condition data set and the stand-by condition data set.

In addition, according to the above embodiment, among the plurality of setting values included in the stand-by condition data set, the setting values identical to the corresponding setting values of the selected condition data set and the setting values different from the corresponding setting values of the selected condition data set are displayed in different modes. This allows the areas of changed setting values (i.e., the different points between the selected condition data set and the stand-by condition data set) to be readily specified on the stand-by condition preview screen.

For example, it is assumed that an operator of the injection molding machine 10 repeats test execution of injection molding while creating condition data sets in the order of the condition data sets A, B, and C. In this case, if an injection molded article using the condition data set A has better quality than that of an injection molded article using the condition data set C, there is a high possibility that the different parts of the condition data set A from the condition data set C (hatched parts in FIG. 8) are the setting values to improve the quality of the injection molded article. Accordingly, the operator is capable of quickly specifying hints for improving the quality of the injection molded article through the stand-by condition preview screen in FIG. 8.

In addition, the above embodiment allows optimization of the setting values in the course of repeating the test execution of injection molding by accepting a change in any of the setting values through the selection condition preview screen. Note that the control device 60 may accept a change in any of the setting values on, not only the selection condition preview screen, but also the stand-by condition preview screen.

In addition, according to the above embodiment, comparison of the selected condition data set with the stand-by condition data set selected by an operator among the plurality of stand-by condition data sets stored in the external storage device 66 allows comparison of desired condition data sets on the basis of the result of test execution of injection molding.

In addition, according to the above embodiment, the selection condition preview screen and the stand-by condition preview screen can be switched by a single input operation (i.e., tapping of the 'selected condition' icon or the 'stand-by condition' icon) and thus the selected condition data set and the stand-by condition data set can be readily compared and reviewed. Still in addition, on the selection condition preview screen and the stand-by condition preview screen, a common layout for the plurality of setting values facilitates the comparison and review even more.

Moreover, according to the above embodiment, allowing switching whether to display the setting values in different modes makes it possible to provide an operator with desired information. It should be noted that the 'difference check' icon may be omitted to explicitly indicate the different points from the selected condition data set (hatched areas in FIG. 8) on the stand-by condition preview screen on a regular basis.

The embodiments described above are merely explanatory examples of the present invention and are not intended to limit the scope of the present invention only to those embodiments. Those skilled in the art are capable of carrying out the present invention in various other modes without departing from the spirit of the present invention.

## Claims

1. A molding machine, comprising:
an injection device configured to inject a molding material into a cavity of a clamped mold;
a display device configured to display information;
a memory capable of storing a plurality of condition data sets, each set including a plurality of setting values; and
a control device configured to control the injection device in accordance with a selected condition data set selected in advance from the plurality of condition data sets stored in the memory, wherein
the control device selectively executes
a selected condition display process of displaying the plurality of setting values included in the selected condition data set as a list on the display device and
a stand-by condition display process of displaying the plurality of setting values included in a stand-by condition data set as a list on the display device, the stand-by condition data set being one of the condition data sets different from the selected condition data set, and,
in the stand-by condition display process, causes the display device to display the plurality of setting values displayed as a list among which the setting value identical to that of the selected condition data set and the setting value different from that of the selected condition data set are displayed in different modes.

2. The molding machine according to Claim 1, further comprising an input device configured to accept an input operation by an operator, wherein
the control device updates, in case of accepting an input operation to change any of the setting values through the input device in the selected condition display process, the selected condition data set stored in the memory in accordance with the input operation and
does not accept, in the stand-by condition display process, the input operation to change any of the setting values.

3. The molding machine according to Claim 2, wherein
the memory stores a plurality of the stand-by condition data sets, and
the control device executes
a selection process of accepting an input operation to select one of the plurality of stand-by condition data sets stored in the memory through the input device and
the stand-by condition display process of displaying the plurality of setting values included in the stand-by condition data set selected in the selection process as a list on the display device.

4. The molding machine according to Claim 2, wherein the control device accepts an input operation to switch the selected condition display process and the stand-by condition display process through the input device.

5. The molding machine according to Claim 1, further comprising an input device configured to accept an input operation by an operator, wherein
the control device accepts an input operation to switch whether to display the setting value identical to that of the selected condition data set and the setting value different from that of the selected condition data set in different modes through the input device in the stand-by condition display process.
